# EUROPEAN PATENT SPECIFICATION

(11) **EP 4 233 444 B1**
(45) Date of publication and mention of the grant of the patent: **26.02.2025**
(21) Application number: 21895182.0
(22) Date of filing: 23.11.2021
(51) Int. Cl.: H04W 72/02, H04W 72/20, H04W 72/51

(54) **METHOD AND APPARATUS FOR ENHANCED RESOURCE ALLOCATION IN SL COMMUNICATION**
VERFAHREN UND VORRICHTUNG ZUR VERBESSERTEN RESSOURCENZUWEISUNG IN SL-KOMMUNIKATION
PROCÉDÉ ET APPAREIL POUR UNE ATTRIBUTION DE RESSOURCES AMÉLIORÉE DANS UNE COMMUNICATION SL

(30) Priority: 23.11.2020 US 202063117293 P; 23.02.2021 US 202163152810 P; 18.11.2021 US 202117530189
(43) Date of publication of application: 30.08.2023
(73) Proprietor: Samsung Electronics Co., Ltd., Suwon-si, Gyeonggi-do 16677 (KR)
(72) Inventor: JEONG, Kyeongin, Suwon-si, Gyeonggi-do 16677 (KR); FARAG, Emad Nader, Suwon-si, Gyeonggi-do 16677 (KR)
(74) Representative: Nederlandsch Octrooibureau
(86) International application number: PCT/KR2021/017241
(87) International publication number: WO 2022/108415

(56) References cited:
- WO-A1-2019/097476
- WO-A1-2020/068411
- WO-A1-2020/167092
- WO-A1-2020/197294
- WO-A1-2020/202485
- WO-A1-2020/215859
- US-A1- 2017 318 615
- MODERATOR (LG ELECTRONICS): "Feature lead summary for AI 8.11.2.2 Feasibility and benefits for mode 2 enhancements", vol. RAN WG1, no. e-Meeting; 20201026 - 20201113, 19 November 2020 (2020-11-19), XP051955958, Retrieved from the Internet <URL:https://ftp.3gpp.org/tsg_ran/WG1_RL1/TSGR1_103-e/Docs/R1-2009788.zip R1-2009788 FL summary for AI 8.11.2.2.docx> [retrieved on 20201119]
- ERICSSON: "Support of MR-DC V2X SL coordination over X2", vol. RAN WG3, no. Chongqing, China; 20191014 - 20191018, 4 October 2019 (2019-10-04), XP051810136, Retrieved from the Internet <URL:https://ftp.3gpp.org/tsg_ran/WG3_Iu/TSGR3_105bis/Docs/R3-195949.zip R3-195949.docx> [retrieved on 20191004]
- FRAUNHOFER HHI, FRAUNHOFER IIS: "Resource Allocation Enhancements for Mode 2", 3GPP DRAFT; R1-2008757, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945369
- FUJITSU: "Geographic Location based Frequency Resource Operation for NR Sidelink", 3GPP DRAFT; R2-2009135, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. e-Meeting; 20201102 - 20201113, 21 October 2020 (2020-10-21), Mobile Competence Centre ; 650, route des Lucioles ; F-06921 Sophia-Antipolis Cedex ; France , XP051940895
- LG ELECTRONICS: "Discussion on feasibility and benefits for mode 2 enhancement", 3GPP DRAFT; R1-2007896, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 24 October 2020 (2020-10-24), Mobile Competence Centre ; 650, route des Lucioles ; F-06921 Sophia-Antipolis Cedex ; France , XP051946544
- FUJITSU: "Considerations on Inter-UE Coordination for Mode 2 Enhancements", 3GPP DRAFT; R1-2007788, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945292

## Description

### Technical Field

The present disclosure relates generally to wireless communication systems and, more specifically, the present disclosure relates to enhanced resource allocation in a wireless communication system.

### Background Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Prior art technology is known from the published patent application US2017/318615.

### Disclosure of Invention

### Technical Problem

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

### Solution to Problem

The invention made is captured in the attached set of independent claims. Optional features are known from the set of dependent claims.

### Advantageous Effects of Invention

The present disclosure relates to wireless communication systems and, more specifically, the present disclosure relates to enhanced resource allocation in a wireless communication system.

### Brief Description of Drawings

For a more complete understanding of the present disclosure and its advantages, reference is now made to the following description taken in conjunction with the accompanying drawings, in which like reference numerals represent like parts:
FIGURE 1 illustrates an example wireless network according to embodiments of the present disclosure;
FIGURE 2 illustrates an example gNB according to embodiments of the present disclosure;
FIGURE 3 illustrates an example UE according to embodiments of the present disclosure;
FIGURES 4 and 5 illustrate example wireless transmit and receive paths according to this disclosure;
FIGURE 6 illustrates an example V2X communication over sidelink according to embodiments of the present disclosure;
FIGURE 7 illustrates a signaling flow for enhanced SL resource allocation according to embodiments of the present disclosure;
FIGURE 8 illustrates an example full channel sensing and resource selection according to embodiments of the present disclosure;
FIGURE 9A illustrates an example partial channel sensing and resource selection according to embodiments of the present disclosure;
FIGURE 9B illustrates another example partial channel sensing and resource selection according to embodiments of the present disclosure;
FIGURE 10 illustrates a signaling flow for partial channel sensing and resource selection according to embodiments of the present disclosure; and
FIGURE 11 illustrates a flow chart of a method for enhanced resource allocation according to embodiments of the present disclosure.

### Mode for the Invention

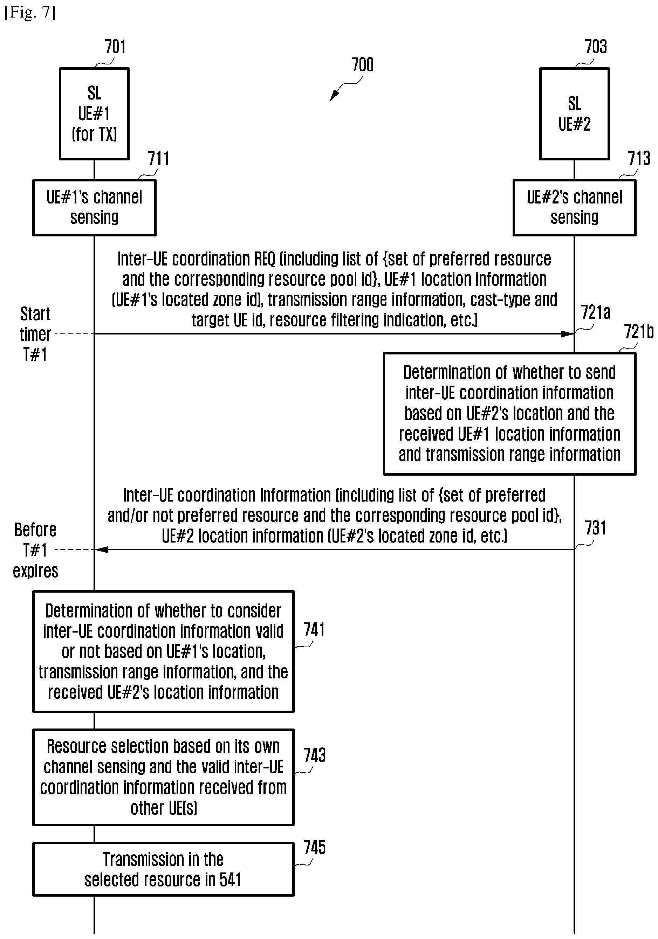

The invention made is described in the embodiments relating to figure 7.

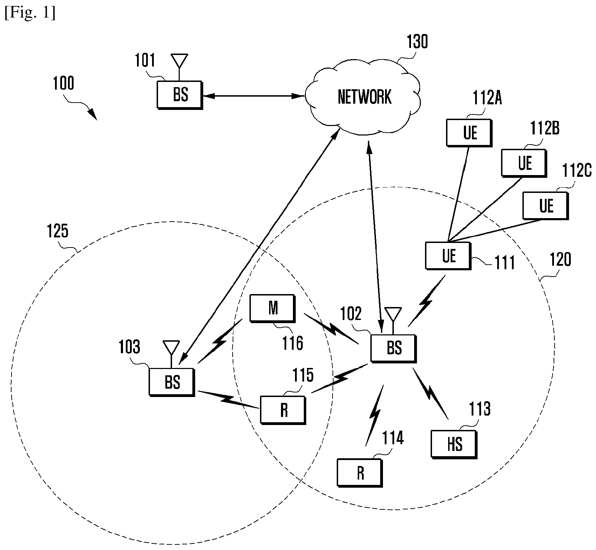

FIGURES 1 through FIGURE 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents are hereby incorporated by reference into the present disclosure as if fully set forth herein: 3GPP TS 38.213 v16.3.0, "NR; Physical Layer Procedures for Control"; 3GPP TS 38.321 v16.2.0, "Medium Access Control (MAC) protocol specification"; 3GPP TS 38.331 v.16.2.0, "Radio Resource Control (RRC) protocol specification"; and 3GPP TR 38.885 v.16.0.0, "Study on NR Vehicle-to-Everything (V2X)."

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of UEs within a coverage area 120 of the gNB 102. The first plurality of UEs includes a UE 111, which may be located in a small business; a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, LTE, LTE-A, WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3rd generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, for enhanced resource allocation in SL communication. In certain embodiments, and one or more of the gNBs 101-103 includes circuitry, programing, or a combination thereof, for enhanced resource allocation in SL communication.

As discussed in greater detail below, the wireless network 100 may have communications facilitated via one or more devices (e.g., UE 112A to 112C) that may have a sidelink communication with the UE 111. The UE 111 can communicate directly with the UEs 112A to 112C through a set of sidelinks to provide s sideline communication, for example, in situations where the UEs 112A to 112C are remotely located or otherwise in need of facilitation for network access connections (e.g., BS 102) beyond or in addition to traditional fronthaul and/or backhaul connections. In one example, the UE 111 can have a direct communication, through the sidelink communication, with UEs 112A to 112C with or without support by the BS 102. Various of the UEs (e.g., as depicted by UEs 113 to 116) may be capable of one or more communication with their own devices (such as 112A to 112C of the UE 111) or other devices.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

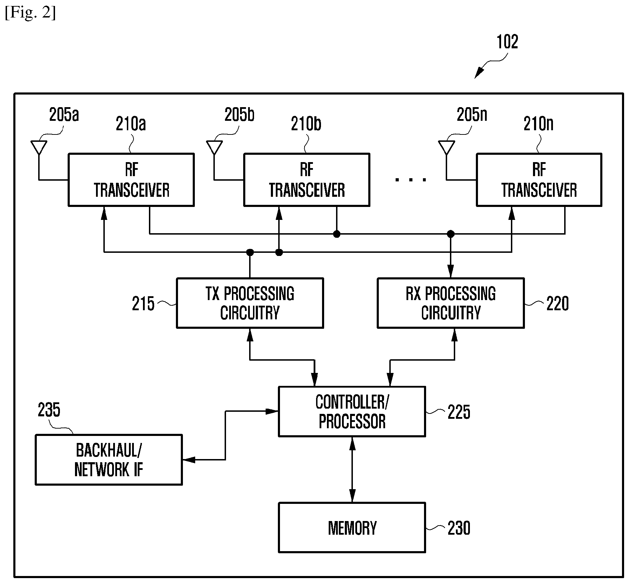

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple RF transceivers 210a-210n, transmit (TX) processing circuitry 215, and receive (RX) processing circuitry 220. The gNB 102 also includes a controller/ processor 225, a memory 230, and a backhaul or network interface 235.

The RF transceivers 210a-210n receive, from the antennas 205a-205n, incoming RF signals, such as signals transmitted by UEs in the network 100 or by other UEs on the sidelink. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the gNB 102. For example, the controller/ processor 225 could control the reception of uplink channel signals and the transmission of downlink channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/ processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. As a particular example, an access point could include a number of interfaces 235, and the controller/processor 225 could support the enhanced resource allocation. As another particular example, while shown as including a single instance of TX processing circuitry 215 and a single instance of RX processing circuitry 220, the gNB 102 could include multiple instances of each (such as one per RF transceiver). Also, various components in FIGURE 2 could be combined, further subdivided, or omitted and additional components could be added according to particular needs.

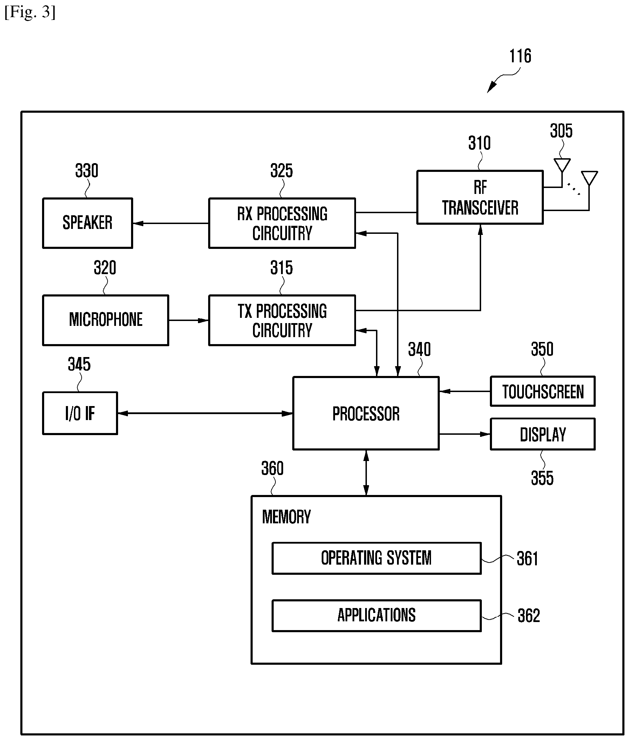

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The RF transceiver 310 receives, from the antenna 305, an incoming RF signal transmitted by a gNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of downlink and/or sidelink channel signals and the transmission of uplink and/or sidelink channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as processes for enhanced resource allocation. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

The discussion of 5G systems and frequency bands associated therewith is for reference as certain embodiments of the present disclosure may be implemented in 5G systems. However, the present disclosure is not limited to 5G systems or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

A communication system includes a downlink (DL) that refers to transmissions from a base station or one or more transmission points to UEs and an uplink (UL) that refers to transmissions from UEs to a base station or to one or more reception points and a sidelink (SL) that refers to transmissions from one or more UEs to one or more UEs.

A time unit for DL signaling or for UL signaling on a cell is referred to as a slot and can include one or more symbols. A symbol can also serve as an additional time unit. A frequency (or bandwidth (BW)) unit is referred to as a resource block (RB). One RB includes a number of sub-carriers (SCs). For example, a slot can have duration of 0.5 milliseconds or 1 millisecond, include 14 symbols and an RB can include 12 SCs with inter-SC spacing of 15 KHz or 30 KHz, and so on.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. For brevity, a DCI format scheduling a PDSCH reception by a UE is referred to as a DL DCI format and a DCI format scheduling a physical uplink shared channel (PUSCH) transmission from a UE is referred to as an UL DCI format.

A gNB transmits one or more of multiple types of RS including channel state information RS (CSI-RS) and demodulation RS (DMRS). A CSI-RS is primarily intended for UEs to perform measurements and provide CSI to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process includes NZP CSI-RS and CSI-IM resources.

A UE can determine CSI-RS transmission parameters through DL control signaling or higher layer signaling, such as radio resource control (RRC) signaling, from a gNB. Transmission instances of a CSI-RS can be indicated by DL control signaling or be configured by higher layer signaling. A DMRS is transmitted only in the BW of a respective PDCCH or PDSCH and a UE can use the DMRS to demodulate data or control information.

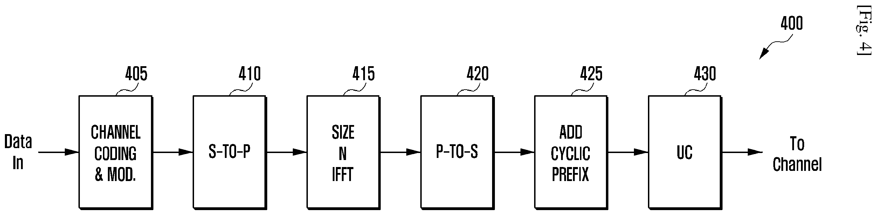

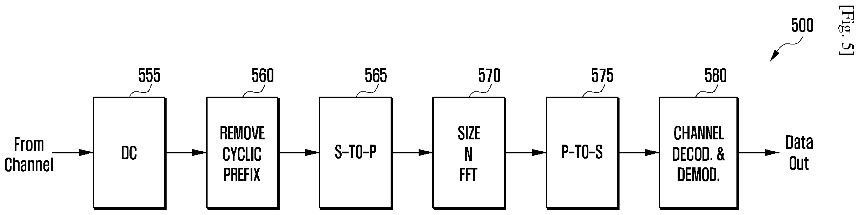

FIGURE 4 and FIGURE 5 illustrate example wireless transmit and receive paths according to this disclosure. In the following description, a transmit path 400 may be described as being implemented in a gNB (such as the gNB 102), while a receive path 500 may be described as being implemented in a UE (such as a UE 116). However, it may be understood that the receive path 500 can be implemented in a gNB and that the transmit path 400 can be implemented in a UE. It may also be understood that the receive path 500 can be implemented in a first UE and that the transmit path 400 can be implemented in a second UE to support SL communications. In some embodiments, the receive path 500 is configured to support sidelink measurements in V2X communication as described in embodiments of the present disclosure.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 400, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

As illustrated in FIGURE 5, the down-converter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and/or transmitting in the sidelink to another UE and may implement the receive path 500 for receiving in the downlink from the gNBs 101-103 and/or receiving in the sidelink from another UE.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

In 3GPP wireless standards, NR has been being discussed as a 5G wireless communication. One of NR features under the discussion is V2X.

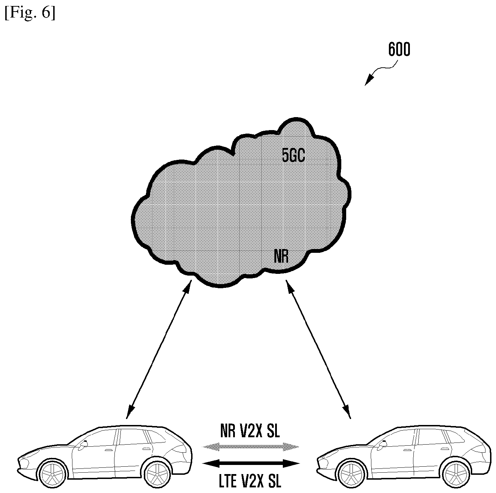

FIGURE 6 illustrate an example V2X communication over sidelink 600 according to embodiments of the present disclosure. An embodiment of the V2X communication over sidelink 600 shown in FIGURE 6 is for illustration only.

FIGURE 6 illustrates an example scenario of vehicle to vehicle communication. Two or multiple vehicles can transmit and receive data/control over direct link/interface between vehicles. The direct link/interface between vehicles or between vehicle and other things is named as a sidelink (SL) in 3GPP. Note that the FIGURE 6 describes the scenario where the vehicles still can communicate with a gNB in order to acquire SL resources, SL radio bearer configurations, etc., however it is also possible even without interaction with the gNB, vehicles still communicate each other over the SL. In the case, the SL resources, the SL radio bearer configurations, etc., are pre-configured (e.g., via V2X server or any other core network entity).

For more detailed V2X scenarios and studies were introduced in 3GPP standard specification. One of main difference compared to UL (e.g., link from the UE to the gNB) is the resource allocation mechanism for transmission. In the UL, the resource for transmission is allocated by the gNB, however in SL, the UE itself selects a resource within the SL resource pool, which is configured by the gNB and selected by the UE if multiple SL resource pools are configured, based on UE's channel sensing result and the required number of resources for data/control transmission. The details of SL resource selection are specified in 3GPP standard specification.

In 3GPP Rel-16, the basic SL communication functionalities are supported. For Rel-17, it is planned to introduce more enhanced features into SL. One of Rel-17 features is to introduce enhanced SL resource allocation mechanism by taking other UE's SL channel sensing result into account in addition to TX UE (UE who intends to transmit data/control over SL)'s own SL channel sensing. Other UE(s) can inform a TX UE of the set of preferred and/or not preferred resource information derived from its channel sensing by the control message which called inter-UE coordination information. This embodiment provides an efficient inter-UE coordination based resource allocation mechanism.

FIGURE 7 illustrates a signaling flow 700 for enhanced SL resource allocation according to embodiments of the present disclosure. For example, the signaling flow 700 as may be performed by UEs (e.g., 111-116 as illustrated in FIGURE 1) and other UE(s) (e.g., 111A - 111C as illustrated in FIGURE 1). An embodiment of the signaling flow 700 shown in FIGURE 7 is for illustration only.

As illustrated in FIGURE 7, a SL UE#1 701 intends to transmit data/control over SL and a SL UE#2 703 may provide inter-UE coordination information. The SL UE#2 703 can be a receiver UE of the data/control to be transmitted by the SL UE#1 or any other UE that can provide inter-UE coordination information. In steps 711 and 713, the SL UE#1 and the UE#2 perform SL channel sensing on the resources within the selected resource pool(s) for transmission. UE#2 can perform step 713 after the reception of inter-UE coordination REQ 721a.

Note from the UE#2 point of view, although the UE#2 does not have any data/ control to transmit, the UE#2 still performs SL channel sensing in order to provide inter-UE coordination information. Also note that step 711 can be always performed in the background once the SL UE#1 is configured for transmission of data/control and step 713 can be always performed in the background once the UE#2 is configured to provide inter-UE coordination information. In step 721a, the SL UE#1 sends inter-UE coordination request (REQ). The SL UE#1 can send the inter-UE coordination REQ by any SL cast-type (SL unicast, SL groupcast, or SL broadcast).

An inter-UE coordination REQ can include the following information or part of the following information: (i) a list of {set of preferred resource(s) and the corresponding resource pool id} information; (ii) SL UE#1 location information (e.g., SL UE#1's located zone id) and transmission range information; (iii) a SL cast-type and target UE id that provides inter-UE coordination information; and (iv) resource filtering indication.

Corresponding resource pool id indicates the selected resource pool for transmission by the SL UE#1. Set of preferred resource indicates the SL UE#1's preferred resource information, for example preferred SL channel index/number within the corresponding resource pool or indication to indicate whether it is preferred or not for each SL channel within the corresponding resource pool can be included. The preferred resource(s) can be determined based on SL UE#1's channel sensing, for example if the measured channel busy ratio of the resource is below than a threshold as a result of channel sensing, this resource can be determined as the preferred resource for transmission. In order for this determination, the threshold and/or hysteresis parameters to compare measured channel busy ratio can be also configured by the gNB or pre-configured although it is not illustrated in FIGURE 7.

In one example, an entering condition to set the resource as preferred resource is provide by: *Ms+Hys<Thresh.*

In one example, a leaving condition not to set the resource as preferred resource is provided by: *Ms-Hys>Thresh.*

The variables in the formula are defined as follows: (i) *Ms* is the measurement result of channel busy ratio of the resource within the transmission resource pool; (ii) *Hys* is the hysteresis parameter for this determination; and (iii) *Thresh* is the threshold parameter for this determination.

The SL UE#1 can include multiple preferred resources if multiple resources are met with the above example condition. In order to limit a number of preferred resources, the maximum number of the preferred resource information to be included in inter-UE coordination REQ can be also configured by the gNB or preconfigured although it is not illustrated in FIGURE 7.

Note that the SL UE#1 can include the multiple preferred resources for multiple resource pools for transmissions if multiple resource pools are (pre)configured for transmission. In order to limit a number of list of {set of preferred resource and the corresponding resource pool id}, the maximum number of list to be included in inter-UE coordination REQ can be also configured by the gNB or preconfigured although it is not illustrated in FIGURE 7.

The SL UE#1 location information indicates the SL UE#1's location. For example, detailed GPS location information can be included. Or to reduce the overhead of detailed GPS location information, the SL UE#1's located zone id can be included instead of detailed GPS location information. The SL UE#1's located zone id can be determined based on which zone the SL UE#1's actual location, which derived from GPS, belongs to.

Zone information (for example, how to divide the whole world into the zones) can be configured by the gNB or pre-configured. For example, the following zone id calculation that was introduced for SL groupcast specific hybrid automatic repeat request (HARQ) feedback mechanism in Rel-16 SL can be reused for the UE location information in inter-UE coordination information. *sl-ZoneConfig* including *sl-ZoneLength* (with the X unit of meters) is configured by the gNB (by system information or UE dedicated RRC connection reconfiguration message) or pre-configured.

A UE may determine an identity of the zone (i.e., Zone_id) in which the UE is located using the following formula as shown in TABLE 1, if *sl-ZoneConfig* is configured.

**TABLE 1. Formula**

| |
|---|
| *x*₁= Floor (*x* / *L*) Mod 64; |
| *y*₁= Foor (*y* / *L*) Mod 64; and |
| Zone_id = *y*₁ * 64 + *x*₁. |

For the formula as shown in TABLE 1, the parameters in the formula are defined as follows: (i) **L** is the value of *sl-ZoneLength* included in *sl-ZoneConfig;* (ii) **x** is the geodesic distance in longitude between UE's current location and geographical coordinates (0, 0) according 3GPP standard specification and x is expressed in a unit if meter; and (iii) **y** is the geodesic distance in latitude between UE's current location and geographical coordinates (0, 0) according to 3GPP standard specification and y is expressed in a unit of meter.

Transmission range information (or communication range information) indicates the required transmission range for the SL data/control to be transmitted. This information is provided by the upper layer with the required quality of service (QoS) information for the SL data/control to be transmitted or the information can be configured with the corresponding SL PQI (PC5 5G QoS Identifier) by the gNB (by system information or UE dedicated RRC connection reconfiguration message) or pre-configured with the corresponding SL PQI. This information can be associated with a destination layer 2 (L2) id or a logical channel id. If (pre)configured, this information indicates a number of meters. Note that a SL data/control can have different required transmission range if the SL data/control is arrived from the different SL logical channels (or the different SL applications).

Cast-type information indicates whether the cast-type information is for SL unicast (one to one communication), SL groupcast (one to M communication and M belongs to the same group as the transmission UE), or SL broadcast (one to all communication). A target UE id indicates the L1/L2 id of the destination/receiver UE(s). L1 id is the one that is used for L1 (or physical) control channel, and L2 id is the one that is used in multiple access control (MAC) header. L1 id can be part of L2 id. The target UE id can indicate one specific destination/receiver UE in SL unicast while the target UE id can indicate one group id or specific service id in SL groupcast and all SL UEs in SL broadcast. The cast-type and/or target UE id information can be set according to the cast-type and/or target UE id for the data/control to be transmitted or the cast-type and/ or target UE id can be set independently to only select the target UE that can provide inter-UE coordination information regardless of actual destination/receiver UE(s) of the data/control to be transmitted.

A resource filtering indication indicates when a SL UE#2 may send the corresponding inter-UE coordination information. For example, the following information can be included.

In one example, an indication A is included. The indication A indicates that a SL UE#2 can send the corresponding inter-UE coordination information only when a SL UE#2 has different information for the received set of preferred resources in step 721a. For example, if the SL UE#2 has "not preferred resource" for any of the received "preferred resource" in step 721a. Otherwise, the SL UE#2 does not send the corresponding inter-UE coordination information.

In one example, an indication B is included. The indication B indicates that a SL UE#2 can send the corresponding inter-UE coordination information when a SL UE#2 has any information for the received set of preferred resources in step 721a. It does not matter whether it is same information or not as the received ones.

In one example, an indication C is included. The indication C indicates that a SL UE#2 can send the corresponding inter-UE coordination information when a SL UE#2 has any information without any restriction related to the received set of preferred resources in step 721a.

Once the SL UE#1 sends a signal at step 721a, the SL UE#1 starts timer T#1. T#1 is to wait the corresponding inter-UE coordination information. If the inter-UE coordination information is received before T#1 expiry, the SL UE#1 may consider the information included in inter-UE coordination information in the final resource selection is step 743, otherwise the SL UE#1 may only consider its own information in the final resource selection in step 743.

Once the SL UE#2 receives the inter-UE coordination REQ in step 721a, it determines whether the SL UE#2 may transmit the corresponding inter-UE coordination information or not in step 721b. It can be determined based on the calculated distance between the SL UE#1 and the SL UE#2, and the received transmission/communication range information. Distance between the SL UE#1 and the SL UE#2 can be calculated based on the SL UE#2's location which is derived from GPS/GNSS (or SL UE#2's located zone id which can be calculated in the same manner as the SL UE#1) and the received SL UE#1's location (or SL UE#1's located zone id) in step 721a. For example, the SL UE#2 determines to transmit the corresponding inter-UE coordination information if the following condition is met. Otherwise, the SL UE#2 determines not to transmit the corresponding inter-UE coordination information.

In one example #1a of the condition, the calculated distance between the SL UE#2 and the SL UE#1 is (equal or) larger than the distance-threshold#1 and/or the calculated distance is (equal or) smaller than the received transmission range. A distance-threshold#1 (with the unit of meters) can be signalled in step 721a or the distance-threshold#1 can be configured by the gNB (by system information or UE dedicated RRC connection reconfiguration message) or pre-configured.

In one example #1b of the condition, the calculated distance between the SL UE#2 and the SL UE#1 is (equal or) larger than {the received transmission range minus Distance-offset#1} and/or the calculated distance is (equal or) smaller than the received transmission range. Distance-offset#1 (with the unit of meters) can be signalled in step 721a or the distance-offset#1 can be configured by the gNB (by system information or UE dedicated RRC connection reconfiguration message) or pre-configured. Note that a distance-offset can be also signalled or (pre)configured with the unit of percentages. If the distance-offer is determined in a unit of percentage, "{the received transmission range minus Distance-offset#1}" in the above can be replaced by {the received transmission range multiplied by the indicated percentages} or {the received transmission range transmission range minus (the received range transmission range multiplied by the indicated percentage) }.

In one example 2 of the condition, if the SL UE#2's id is matched with the received target UE id with the corresponding cast-type. For instance, if the received cast-type is SL unicast and the received target UE id is matched with the SL UE#2's source id for SL unicast, or if the received cast-type is SL groupcast and the received target UE id is matched with the SL UE#2's group id or service id for SL groupcast, which the SL UE#2 belongs to, or if the received cast-type is SL broadcast and/or the received target UE id is matched to the code-point (value) that is reserved for the SL broadcast. Note that cast-type information may be omitted in step 721a and in this case, the UE determines the condition only based on target UE id information.

In one example 3 of the condition, if the SL UE#2 has the inter-UE coordination information which can meet the resource preference indication. For example, if the indication A is received and the SL UE#2 has different information for the received set of preferred resources (e.g., SL UE#2 has "not preferred" information for the received preferred resource in step 721a).

Note that step 721b in FIGURE 7 is illustrated based on the assumption with Example#1a or Example#1b, but other examples can be also used in the determination procedure. Also, a combination of multiple examples (e.g., the SL UE#2 determines to transmit the corresponding inter-UE coordination information if the example 1a/1b and the example 2 are met, or if the example 1a/1b and the example 3 are met, or if the example 1a/1b and the example 2 and the example 3 are met, etc.) can be used.

In step 731, the SL UE#2 sends inter-UE coordination information based on SL UE#2's channel sensing results. Note that although FIGURE 7 illustrates SL UE#2's inter-UE coordination information is sent as the response of inter-UE coordination REQ from a SL UE#1 (with step 721a and 721b), the SL UE#2 can also send inter-UE coordination information as a standalone message (without the reception of inter-UE coordination REQ). In this case, step 721a and 721b are skipped. It means that step 721a and 721b are needed only when the SL UE#2's inter-UE coordination information transmission is triggered by an inter-UE coordination REQ. Inter-UE coordination information includes the following information: (i) a list of {set of preferred and/or not preferred resource(s) and the corresponding resource pool id} information; and (ii) SL UE#2 location information (e.g., SL UE#2's located zone id).

A corresponding resource pool id indicates an index of the resource pool which the set of preferred and/or not preferred resource(s) belongs to. A set of preferred and/or not preferred resource(s) indicates the SL UE#2's recommended preferred and/or not preferred resource information, for example, preferred or not preferred SL channel index/number within the corresponding resource pool or indication to indicate whether it is preferred or not preferred for each SL channel within the corresponding resource pool can be included.

The preferred resource(s) can be determined based on SL UE#2's channel sensing, for example if the measured channel busy ratio of the resource is below than a threshold as the result of channel sensing, this resource can be determined as the preferred resource for transmission. In order for this determination, the threshold and/ or hysteresis parameters to compare measured channel busy ratio can be also configured by the gNB or preconfigured although it is not illustrated in FIGURE 7. See the following example of equation for the determination.

In one example, an entering condition to set the resource as preferred resource is given by: *Ms+Hys<Thresh.*

In one example, a leaving condition not to set the resource as preferred resource is given by: *Ms-Hys>Thresh.*

In such example, the variables in the formula are defined as follows: (i) *Ms* is the measurement result of channel busy ratio of the resource within the transmission resource pool; (ii) *Hys* is the hysteresis parameter for this determination; and (iii) *Thresh* is the threshold parameter for this determination.

The not-preferred resource(s) can be also determined based on SL UE#2's channel sensing, for example if the measured channel busy ratio of the resource does not meet the above entering condition for preferred resource(s), it can be determined as not-preferred resource(s). As alternative, separate additional conditions for not-preferred resource(s) can be defined. For example: (i) an entering condition to set the resource as not preferred resource is given by: Ms + Hys#2 > Thresh#2; and (ii) a leaving condition to set the resource as not preferred resource is given by: Ms - Hys#2 < Thresh#2.

The variables in the formula as mentioned above are defined as follows: (i) *Ms* is the measurement result of channel busy ratio of the resource within the transmission resource pool; (ii) *Hys#2* is the hysteresis parameter for this determination; and (iii) *Thresh#2* is the threshold parameter for this determination. Note that Hys#2 and/or Thresh#2 may be replaced by the Hys and Thresh in the condition for the preferred resource determination if same value(s) is used.

Note that if inter-UE coordination information is sent as the response in step 721a, the resource information to be included in step 731 can have only information that corresponding to the resource information included in step 721a.

The SL UE#2 location information indicates the SL UE#2's location. For example, detailed GPS location information can be included. Or to reduce the overhead of detailed GPS location information, the SL UE#2's located zone id can be included instead of detailed GPS location information. The SL UE#2's located zone id can be determined based on which zone the SL UE#2's actual location, which derived from GPS, belongs to.

Zone information (for example, how to divide the whole world into the zones) can be configured by the gNB or pre-configured. For example, the following zone id calculation that was introduced for SL groupcast specific HARQ feedback mechanism in 3GPP Rel-16 SL can be reused for the UE location information in inter-UE coordination information. *sl-ZoneConfig* including *sl-ZoneLength* (with the X unit of meters) is configured by the gNB (by system information or UE dedicated RRC connection reconfiguration message) or pre-configured.

A UE may determine an identity of the zone (i.e., Zone_id) in which the UE is located using the following formula as shown in TABLE 2, if *sl-ZoneConfig* is configured.

**TABLE 2. Formula**

| |
|---|
| *x*₁= Floor (*x* / *L*) Mod 64; |
| *y*₁= Floor (*y* / *L*) Mod 64; anc |
| Zone id = *y*₁ * 64 + *x*₁. |

The parameters in the formula as shown in TABLE 2 are defined as follows: (i) **L** is the value of *sl-ZoneLength* included in *sl-ZoneConfig;* (ii) **x** is the geodesic distance in longitude between UE's current location and geographical coordinates (0, 0) according to 3GPP standard specification and the x is expressed in a unit of meter; and (iii) **y** is the geodesic distance in latitude between UE's current location and geographical coordinates (0, 0) according to 3GPP standard specification and y is expressed in a unit of meter.

When the SL UE#1 receives inter-UE coordination information before T#1 expires (in step 731), the SL UE#1 determines whether the SL UE#1 may consider this inter-UE coordination information valid or not (in step 741). It can be determined based on the calculated distance between the SL UE#1 and the SL UE#2, and the SL UE#1's transmission/communication range information for the data/control to be transmitted. A distance between the SL UE#1 and the SL UE#2 can be calculated based on the SL UE#1's location which is derived from GPS/GNSS (or SL UE#1's located zone id. Zone id calculation was already explained in the above) and the received SL UE#2's location (or SL UE#2's located zone id) in step 731.

For example, the SL UE#1 considers the inter-UE coordination information valid if the calculated distance between the SL UE#1 and the SL UE#2 is (equal or) smaller than the SL transmission/communication range for the data/control to be transmitted. Otherwise, the SL UE#1 considers the inter-UE coordination information not valid.

In another example, the SL UE#1 can consider the inter-UE coordination information valid if the calculated distance between the SL UE#1 and the SL UE#2 is (equal or) larger than distance-threshold#2 and/or the calculated distance is (equal or) smaller than the SL transmission/communication range for the data/control to be transmitted. Otherwise, the SL UE#1 considers the inter-UE coordination information not valid.

A distance-threshold#2 can be configured by the gNB (by system information or UE dedicated RRC connection reconfiguration) or pre-configured. SL transmission/ communication range information indicates the required transmission range for the SL data/control to be transmitted. This information is provided by the upper layer with the required QoS information for the SL data/control to be transmitted or the information can be configured with the corresponding SL PQI (PC5 5G QoS Identifier) by the gNB (by system information or UE dedicated RRC connection reconfiguration message) or pre-configured with the corresponding SL PQI. This information can be associated with a destination layer 2 (L2) id or a logical channel id. If (pre)configured, the information indicates number of meters. Note that a SL data/control can have different required transmission range if the SL data/control is arrived from the different SL logical channels (or the different SL applications).

As illustrated in FIGURE 7, in step 743, the SL UE#1 performs final resource selection for data/control transmission taking into account its own channel sensing results in step 711 or step 721a and the valid received inter-UE coordination information from the SL UE#2. For example, the SL UE#1 can exclude the resources that inter-UE coordination information indicates as not preferred, or the SL UE#1 can select one of the resources that inter-UE coordination information indicates as preferred.

Note that if the SL UE#1 does not receive any valid inter-UE coordination information before the timer T#1 expires, the SL UE#1 performs final resource selection for data/control transmission only based on its own channel sensing results. In the case, the SL UE#1 does not attempt to receive further inter-UE coordination information once the timer T#1 expires. Once the final resource(s) is selected in step 743, the SL UE#1 transmits the data/control over the selected resource(s) in step 745.

Note although it is assumed the transmission/communication range information is included in step 721a or step 731 in FIGURE 7, the UE may derive the transmission/ communication range information even without including it in step 721a or step 731. As described above, the transmission/communication range information is provided by the upper layer as the part of required QoS information. Therefore, the UE can simply derive the transmission/communication range information from the QoS information which is associated with the destination L2 id or logical channel.

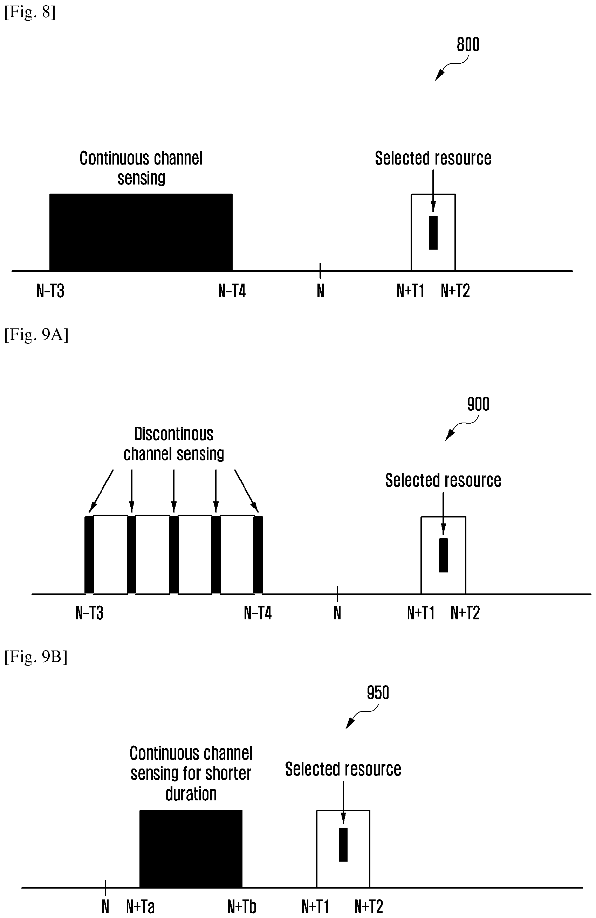

FIGURE 8 illustrates an example full channel sensing and resource selection 800 according to embodiments of the present disclosure. An embodiment of the full channel sensing and resource selection 800 shown in FIGURE 8 is for illustration only.

In 3GPP Rel-16, the basic SL communication functionalities are supported. For Rel-17, it is planned to introduce more enhanced features into SL. One of Rel-17 features is to introduce enhanced SL resource allocation mechanism by taking power saving aspect into account. FIGURE 8 illustrates 3GPP Rel-16 full channel sensing operation for a UE autonomous resource selection procedure.

As illustrated in FUGURE 8, it may assume that, at time N, the UE triggers the resource selection for the data/control transmission, which is arrived from the upper layer. The UE always performs a channel sensing operation to find out the unoccupied channel for possible data/control transmission. If resource selection for the data/control transmission is triggered at time N, in order to select/reserve the unoccupied resource/ channel, the UE uses the result of channel sensing operation that was performed between at time N-T3 and at time N-T4. If the UE finds out the unoccupied resource/ channel as a result of channel sensing operation between at time N-T3 and at time N-T4, the resource/channel may be selected/reserved in a time domain between at time N+T1 and at time N+T2 for data/control transmission. Note in 3GPP Rel-16, the UE continuously performs channel sensing between at time N-T3 and at time N-T4.

FIGURE 9A illustrates an example partial channel sensing and resource selection according to embodiments of the present disclosure. An embodiment of the partial channel sensing and resource selection 900 shown in FIGURE 9A is for illustration only.

FIGURE 9B illustrates another example partial channel sensing and resource selection 950 according to embodiments of the present disclosure. An embodiment of the partial channel sensing and resource selection 950 shown in FIGURE 9B is for illustration only.

FIGURES 9A and 9B illustrate partial channel sensing operations for UE autonomous resource selection procedure, which are newly considered for UE power saving in 3GPP Rel-17. FIGURE 9A is similar to the operation described in FIGURE 8. Main difference in FIGURE 9A is that the UE actually performs channel sensing operation discontinuously during the channel sensing window between at time N-T3 and at time N-T4, so the UE can have power saving gains compared to the continuous channel sensing in FIGURE 8.

As illustrated in FIGUREs 9A, it may assume that, at time N, the UE triggers the resource selection for the data/control transmission, which is arrived from the upper layer. The UE uses the result of channel sensing operation that was performed discontinuously in time domain between at time N-T3 and at time N-T4, to find out the unoccupied resource/channel for its data/control transmission. If the UE finds out the unoccupied resource/channel as the result of partial channel sensing operation between at time N-3 and at time N-4, the resource/channel may be selected/reserved in time domain between at time N+T1 and at time N+T2 for data/control transmission. In FIGURE 9B, it may assume that the UE triggers the resource selection for the data/ control transmission, which is arrived from the upper layer at time N. In this case, the UE starts channel sensing operation between at time N+Ta and at time N+Tb once the resource selection is triggered at time N.

The UE performs a continuous channel sensing operation to find out the unoccupied resource/channel between at time N+Ta and at time N+Tb, however the duration between N+Ta and N+Tb is shorter than the channel sensing window (between N-T3 and N-T4) described in FIGURE 8. With the shorter continuous channel sensing operation after the resource selection is triggered, the UE can have power saving gain and also it can meet the required delay budget. If the UE finds out the unoccupied resource/channel as the result of partial channel sensing operation between at time N+Ta and at time N+Tb, the resource/channel may be selected/reserved in time domain between at time N+T1 and at time N+T2 for data/control transmission.

Note that the UE behaviors described in FIGURE 8, FIGURE 9A, ad FIGURE 9B are for the UE who performs resource selection/reservation for data/control transmissions. For a partial channel sensing operation, as described in the above two kinds of modes are considered (one is described in FIGURE 9A and another is described in FIGURE 9B). If two kinds of partial channel sensing operations co-exist, the performance of partial channel sensing may be decreased because of different partial channel sensing duration in time domain for each mode. There may be a mechanism to avoid the aforementioned problem.

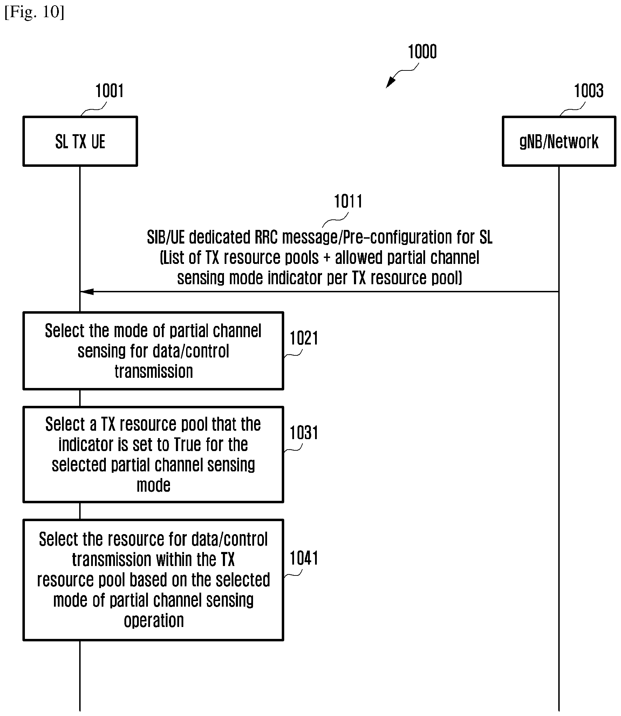

FIGURE 10 illustrates a signaling flow 1000 for partial channel sensing and resource selection according to embodiments of the present disclosure. For example, the signaling flow 1000 as may be performed by a UE (e.g., 111-116 as illustrated in FIGURE 1) and a base station (e.g., 101-103 as illustrated in FIGURE 1). An embodiment of the signaling flow 1000 shown in FIGURE 10 is for illustration only.

FIGURE 10 illustrates an example of this embodiment. an SL UE (e.g., 1001 as illustrated in FIGURE 10) performs data/control transmission. It may be called that a UE is a SL TX UE. A gNB or another network entity (e.g., network entity who is responsible for SL pre-configuration) is shown in 1003. In 1003, all required radio resource and bearer parameters/information for SL communication (in step 1011) are configured or pre-configured. This configuration can be signaled by either system information block (SIB) or UE dedicated RRC message (e.g., RRC connection reconfiguration message) or pre-configuration.

The configuration includes a list of TX resource pools (i.e., resource pools which can be used for selection of resource to transmit data/control) and an allowed partial channel sensing mode indicator per TX resource pool. Once the SL TX UE receives the configuration in step 1011, the SL TX UE selects the mode of partial channel sensing for data/control transmission in step 1021. For example, for a periodic data pattern, the UE can select the partial channel sensing mode that described in FIGURE 9A. The partial channel sending mode may be a partial channel sensing mode 1. And for a non-periodic data pattern, the UE can select the partial channel sensing mode that described in FIGURE 9B. The partial channel sensing mode may be a partial channel sensing mode 2.

Once the SL TX UE selects the partial channel sensing mode in step 1021, the SL TX UE selects a TX resource pool that the indicator is set to "True" for the selected partial channel sensing mode, which means the selected partial channel sensing mode is allowed for the TX resource pool (in step 1031). For example, if the UE selects a partial channel sensing mode 1 in step 1021, the UE selects the TX resource pool that the associated indicator set to "True" for the partial channel sensing mode 1. If the UE selects a partial channel sensing mode 2 in step 1021, the UE selects the TX resource pool that the associated indicator set to "True" for the partial channel sensing mode 2. Once the UE selects a TX resource pool in step 1031, the UE selects the actual resource for data/control transmission within the selected TX resource pool based on the selected partial channel sensing mode, which is described in either FIGURE 9A or FIGURE 9B.

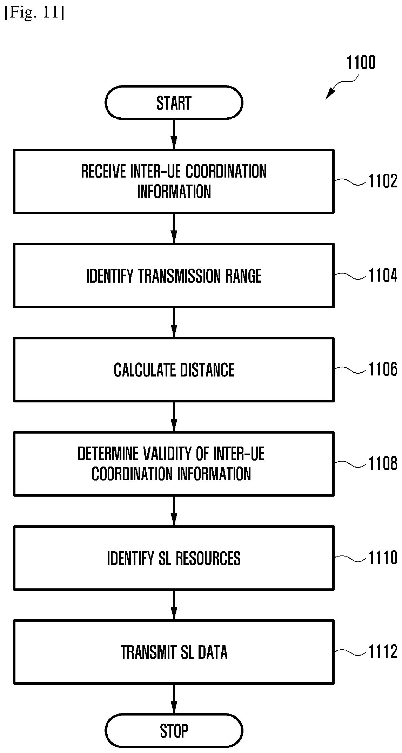

FIGURE 11 illustrates a flow chart of a method 1100 for enhanced resource allocation according to embodiments of the present disclosure. For example, the method 1100 as may be performed by a UE (e.g., 111-116 as illustrated in FIGURE 1). An embodiment of the method 1100 shown in FIGURE 11 is for illustration only. One or more of the components illustrated in FIGURE 11 can be implemented in specialized circuitry configured to perform the noted functions or one or more of the components can be implemented by one or more processors executing instructions to perform the noted functions.

As illustrated in FIGURE 11, the method 1100 begins at step 1102. In step 1102, the first UE receives, from a second UE, inter-UE coordination information including SL resources and a zone ID for resource allocation for transmission of SL data. In step 1102, the inter-UE coordination information further includes at least one of a set of preferred resources, a set of non-preferred resources, or a set of resource pool IDs corresponding to the set of preferred and non-preferred resources, respectively.

Subsequently, in step 1104, the first UE identifies a transmission range for the transmission of the SL data.

Subsequently, in step 1106, the first UE calculates, based on the zone ID, a distance between the second UE and the first UE.

Subsequently, in step 1108, the first UE determines whether the inter-UE coordination information is valid based on the transmission range and the distance.

Next, in step 1110, the first UE identifies the SL resources based on a determination that the inter-UE coordination information is valid.

Finally, in step 1112, the first UE transmits the SL data.

In one embodiment, the first UE identifies the transmission range based on a layer 2 groupcast destination ID and QoS information corresponding to the layer 2 groupcast destination ID, wherein the inter-UE coordination information further includes the transmission range.

In one embodiment, the first UE determines the inter-UE coordination information is invalid when the distance is larger than the transmission range and determines the inter-UE coordination information is valid when the distance is smaller than or equal to the transmission range.

In one embodiment, the first UE calculates the zone ID of the first UE based on a current location of the first UE and a geographical coordination and calculates the distance based on the zone ID and a zone ID received from the second UE.

In one embodiment, the first UE transmits, to the second UE, an inter-UE coordination information request including the zone ID and receives, from the second UE, the inter-UE coordination information corresponding to the inter-UE coordination information request.

In one embodiment, the first UE transmits, to the second UE, the inter-UE coordination information request further including transmission range and receives, from the second UE, the inter-UE coordination information corresponding to the inter-UE coordination information request. In such embodiment, the inter-UE coordination information request further includes a set of preferred resources, a set of non-preferred resources, or a set of resource pool IDs corresponding to the set of preferred resources.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

## Claims

1. A first user equipment (UE) in a wireless communication system, the first UE comprising:
a transceiver configured to receive, from a second UE, inter-UE coordination information including sidelink (SL) resources and a zone identification (ID) for resource allocation for transmission of SL data; and a processor operably coupled to the transceiver, the processor
configured to:
identify a transmission range for the transmission of the SL data, calculate, based on the zone ID, a distance between the second UE and the first UE,
determine whether the inter-UE coordination information is valid based on the transmission range and the distance, and
identify the SL resources based on a determination that the inter-UE coordination information is valid,
wherein the transceiver is further configured to transmit the SL data.

2. The first UE of Claim 1, wherein:
the inter-UE coordination information further includes the transmission range; and
the processor is further configured to identify the transmission range based on a layer 2 groupcast destination ID and quality of service (QoS) information corresponding to the layer 2 groupcast destination ID.

3. The first UE of Claim 1, wherein the processor is further configured to:
determine the inter-UE coordination information is invalid when the distance is larger than the transmission range; and
determine the inter-UE coordination information is valid when the distance is smaller than or equal to the transmission range.

4. The first UE of Claim 1, wherein the processor is further configured to:
calculate the zone ID of the first UE based on a current location of the first UE and geographical coordinates; and
calculate the distance based on the zone ID and a zone ID received from the second UE, and
wherein the inter-UE coordination information further includes at least one of a set of preferred resources, a set of non-preferred resources, or a set of resource pool IDs corresponding to the set of preferred and non-preferred resources, respectively.

5. The first UE of Claim 1, wherein the transceiver is further configured to:
transmit, to the second UE, an inter-UE coordination information request including the zone ID; and
receive, from the second UE, the inter-UE coordination information corresponding to the inter-UE coordination information request, and
wherein:
the transceiver is further configured to:
transmit, to the second UE, the inter-UE coordination information request further including transmission range, and
receive, from the second UE, the inter-UE coordination information corresponding to the inter-UE coordination information request; and
the inter-UE coordination information request further includes a set of preferred resources, a set of non-preferred resources, or a set of resource pool IDs corresponding to the set of preferred resources.

6. A method of a first user equipment (UE) in a wireless communication system, the method comprising:
receiving, from a second UE, inter-UE coordination information
including sidelink (SL) resources and a zone identification (ID) for resource allocation for transmission of SL data;
identifying a transmission range for the transmission of the SL data;
calculating, based on the zone ID, a distance between the second UE and the first UE;
determining whether the inter-UE coordination information is valid based on the transmission range and the distance;
identifying the SL resources based on a determination that the inter-UE coordination information is valid; and
transmitting the SL data.

7. The method of Claim 6, further comprising identifying the transmission range based on a layer 2 groupcast destination ID and quality of service (QoS) information corresponding to the layer 2 groupcast destination ID, wherein the inter-UE coordination information further includes the transmission range.

8. The method of Claim 6, further comprising:
determining the inter-UE coordination information is invalid when the distance is larger than the transmission range; and
determining the inter-UE coordination information is valid when the distance is smaller than or equal to the transmission range.

9. The method of Claim 6, further comprising:
calculating the zone ID of the first UE based on a current location of the first UE and geographical coordinates; and
calculating the distance based on the zone ID and a zone ID received from the second UE, and
wherein the inter-UE coordination information further includes at least one of a set of preferred resources, a set of non-preferred resources, or a set of resource pool IDs corresponding to the set of preferred and non-preferred resources, respectively.

10. The method of Claim 6, further comprising:
transmitting, to the second UE, an inter-UE coordination information request including the zone ID; and
receiving, from the second UE, the inter-UE coordination information corresponding to the inter-UE coordination information request, or
transmitting, to the second UE, the inter-UE coordination information request further including transmission range; and
receiving, from the second UE, the inter-UE coordination information corresponding to the inter-UE coordination information request,
wherein the inter-UE coordination information request further includes a set of preferred resources, a set of non-preferred resources, or a set of resource pool IDs corresponding to the set of preferred resources..

11. A wireless communication system comprising:
a first user equipment, UE, comprising:
a transceiver, and a processor operably connected to the transceiver,
a second user equipment, UE, comprising:
a processor configured to generate inter-UE coordination information including sidelink, SL, resources and a zone identification, ID, and
a transceiver operably connected to the processor, the transceiver configured to:
transmit, to a first UE, the inter-UE coordination information for resource allocation for transmission of SL data, and
receive, from the first UE, the SL data, wherein:
the processor of the first UE is configured to:
identify a transmission range for the transmission of the SL data,
calculate, based on the zone ID in the received inter-UE coordination information, a distance between the second UE and the first UE,
determine whether the inter-UE coordination information is valid based on the transmission range and the distance, and
identify the SL resources based on a determination that the inter-UE coordination information is valid.

12. The system of Claim 11, wherein:
the inter-UE coordination information further includes the transmission range; and
the transmission range is identified based on a layer 2 groupcast destination ID and quality of service (QoS) information corresponding to the layer 2 groupcast destination ID.

13. The system of Claim 11, wherein:
the inter-UE coordination information is determined as invalid when the distance is larger than the transmission range; and
the inter-UE coordination information is determined as valid when the distance is smaller than or equal to the transmission range.

14. The system of Claim 11, wherein the transceiver is further configured to:
receive, from the first UE, an inter-UE coordination information request including the zone ID; and
transmit, to the first UE, the inter-UE coordination information corresponding to the inter-UE coordination information request, and
wherein:
the inter-UE coordination information further includes at least one of a set of preferred resources, a set of non-preferred resources, or a set of resource pool IDs corresponding to the set of preferred and non-preferred resources, respectively;
the zone ID of the first UE is calculated based on a current location of the first UE and geographical coordinates; and
the distance is calculated based on the zone ID and a zone ID received from the second UE.

15. The system of Claim 11, wherein:
the transceiver is further configured to:
receive, from the first UE, the inter-UE coordination information request further including transmission range, and
transmit, to the first UE, the inter-UE coordination information corresponding to the inter-UE coordination information request; and
the inter-UE coordination information request further includes a set of preferred resources, a set of non-preferred resources, or a set of resource pool IDs corresponding to the set of preferred resources.

## Patentansprüche

1. Erstes Benutzergerät (UE) in einem drahtlosen Kommunikationssystem, wobei das erste UE Folgendes umfasst:
einen Transceiver, der zum Empfangen von Inter-UE-Koordinationsinformationen einschließlich Seitenlink(SL)-Ressourcen und einer Bereichskennung (ID) für die Ressourcenzuweisung zur Übertragung von SL-Daten von einem zweiten UE konfiguriert ist; und
einen Prozessor, der mit dem Transceiver wirkend gekoppelt ist, wobei der Prozessor zu Folgendem konfiguriert ist:
Identifizieren eines Übertragungsbereichs für die Übertragung der SL-Daten,
Berechnen einer Distanz zwischen dem zweiten UE und dem ersten UE basierend auf der Bereichs-ID,
Bestimmen, ob die Inter-UE-Koordinationsinformationen gültig sind, basierend auf dem Übertragungsbereich und der Distanz, und
Identifizieren der SL-Ressourcen basierend auf einer Bestimmung, dass die Inter-UE-Koordinationsinformationen gültig sind,
wobei der Transceiver ferner zum Übertragen der SL-Daten konfiguriert ist.

2. Erstes UE nach Anspruch 1, wobei:
die Inter-UE-Koordinationsinformationen ferner den Übertragungsbereich enthalten; und
der Prozessor ferner so konfiguriert ist, dass er den Übertragungsbereich basierend auf einer Layer-2-Groupcast-Ziel-ID und Dienstgüte(QoS)-Informationen identifiziert, die der Layer-2-Groupcast-Ziel-ID entsprechen.

3. Erstes UE nach Anspruch 1, wobei der Prozessor ferner zu Folgendem konfiguriert ist:
Bestimmen, dass die Inter-UE-Koordinationsinformationen ungültig sind, wenn die Distanz größer als der Übertragungsbereich ist; und
Bestimmen, dass die Inter-UE-Koordinationsinformationen gültig sind, wenn die Distanz kleiner als oder gleich dem Übertragungsbereich ist.

4. Erstes UE nach Anspruch 1, wobei der Prozessor ferner zu Folgendem konfiguriert ist:
Berechnen der Bereichs-ID des ersten UE basierend auf einem aktuellen Standort des ersten UE und geografischen Koordinaten; und
Berechnen der Distanz basierend auf der Bereichs-ID und einer von dem zweiten UE empfangenen Bereichs-ID, und
wobei die Inter-UE-Koordinationsinformationen ferner einen Satz bevorzugter Ressourcen, einen Satz nicht bevorzugter Ressourcen und/oder einen Satz von Ressourcenpool-IDs enthalten, die jeweils dem Satz bevorzugter und nicht bevorzugter Ressourcen entsprechen.

5. Erstes UE nach Anspruch 1, wobei der Transceiver ferner zu Folgendem konfiguriert ist:
Übertragen einer Inter-UE-Koordinationsinformations-Anforderung, die die Bereichs-ID enthält, an das zweite UE; und
Empfangen der Inter-UE-Koordinationsinformationen, die der Inter-UE-Koordinationsinformations-Anforderung entsprechen, von dem zweiten UE, und
wobei:
der Transceiver ferner zu Folgendem konfiguriert ist:
Übertragen der Inter-UE-Koordinationsinformations-Anforderung, die ferner den Übertragungsbereich enthält, an das zweite UE, und
Empfangen der Inter-UE-Koordinationsinformationen, die der Inter-UE-Koordinationsinformations-Anforderung entsprechen, von dem zweiten UE; und
wobei die Inter-UE-Koordinationsinformations-Anforderung ferner einen Satz bevorzugter Ressourcen, einen Satz nicht bevorzugter Ressourcen oder einen Satz von Ressourcenpool-IDs enthält, die dem Satz bevorzugter Ressourcen entsprechen.

6. Verfahren für ein erstes Benutzergerät (UE) in einem drahtlosen Kommunikationssystem, wobei das Verfahren Folgendes umfasst:
Empfangen von Inter-UE-Koordinationsinformationen einschließlich Seitenlink(SL)-Ressourcen und einer Bereichs-Kennung (ID) für die Ressourcenzuweisung zur Übertragung von SL-Daten von einem zweiten UE;
Identifizieren eines Übertragungsbereichs für die Übertragung der SL-Daten;
Berechnen einer Distanz zwischen dem zweiten UE und dem ersten UE basierend auf der Bereichs-ID;
Bestimmen, ob die Inter-UE-Koordinationsinformationen gültig sind, basierend auf dem Übertragungsbereich und der Distanz;
Identifizieren der SL-Ressourcen basierend auf einer Bestimmung, dass die Inter-UE-Koordinationsinformationen gültig sind; und
Übertragen der SL-Daten.

7. Verfahren nach Anspruch 6, das ferner das Identifizieren des Übertragungsbereichs basierend auf einer Layer-2-Groupcast-Ziel-ID und Dienstgüte(QoS)-Informationen umfasst, die der Layer-2-Groupcast-Ziel-ID entsprechen, wobei die Inter-UE-Koordinationsinformationen ferner den Übertragungsbereich enthalten.

8. Verfahren nach Anspruch 6, das ferner Folgendes umfasst:
Bestimmen, dass die Inter-UE-Koordinationsinformationen ungültig sind, wenn die Distanz größer als der Übertragungsbereich ist; und
Bestimmen, dass die Inter-UE-Koordinationsinformationen gültig sind, wenn die Distanz kleiner als oder gleich dem Übertragungsbereich ist.

9. Verfahren nach Anspruch 6, das ferner Folgendes umfasst:
Berechnen der Bereichs-ID des ersten UE basierend auf einem aktuellen Standort des ersten UE und geografischen Koordinaten; und
Berechnen der Distanz basierend auf der Bereichs-ID und einer von dem zweiten UE empfangenen Bereichs-ID, und
wobei die Inter-UE-Koordinationsinformationen ferner einen Satz bevorzugter Ressourcen, einen Satz nicht bevorzugter Ressourcen und/oder einen Satz von Ressourcenpool-IDs enthalten, die jeweils dem Satz bevorzugter und nicht bevorzugter Ressourcen entsprechen.

10. Verfahren nach Anspruch 6, das ferner Folgendes umfasst:
Übertragen einer Inter-UE-Koordinationsinformations-Anforderung, die die Bereichs-ID enthält, an das zweite UE; und
Empfangen der Inter-UE-Koordinationsinformationen, die der Inter-UE-Koordinationsinformations-Anforderung entsprechen, von dem zweiten UE, oder
Übertragen der Inter-UE-Koordinationsinformations-Anforderung, die ferner den Übertragungsbereich enthält, an das zweite UE; und
Empfangen der Inter-UE-Koordinationsinformationen, die der Inter-UE-Koordinationsinformations-Anforderung entsprechen, von dem zweiten UE,
wobei die Inter-UE-Koordinationsinformations-Anforderung ferner einen Satz bevorzugter Ressourcen, einen Satz nicht bevorzugter Ressourcen oder einen Satz von Ressourcenpool-IDs enthält, die dem Satz bevorzugter Ressourcen entsprechen.

11. Drahtloses Kommunikationssystem, das Folgendes umfasst:
ein erstes Benutzergerät, UE, das Folgendes umfasst:
einen Transceiver und einen Prozessor, der mit dem Transceiver wirkverbunden ist,
ein zweites Benutzergerät, UE, das Folgendes umfasst:
einen Prozessor, der zum Erzeugen von Inter-UE-Koordinationsinformationen konfiguriert ist, die Seitenlink(SL)-Ressourcen und eine Bereichs-Kennung, ID, enthalten, und
einen Transceiver, der mit dem Prozessor wirkverbunden ist, wobei der Transceiver zu Folgendem konfiguriert ist:
Übertragen der Inter-UE-Koordinationsinformationen zur Ressourcenzuweisung für die Übertragung von SL-Daten an ein erstes UE, und
Empfangen der SL-Daten von dem ersten UE, wobei:
der Prozessor des ersten UE zu Folgendem konfiguriert ist:
Identifizieren eines Übertragungsbereichs für die Übertragung der SL-Daten,
Berechnen einer Distanz zwischen dem zweiten UE und dem ersten UE basierend auf der Bereichs-ID in den empfangenen Inter-UE-Koordinationsinformationen,
Bestimmen, ob die Inter-UE-Koordinationsinformationen gültig sind, basierend auf dem Übertragungsbereich und der Distanz, und
Identifizieren der SL-Ressourcen basierend auf einer Bestimmung, dass die Inter-UE-Koordinationsinformationen gültig sind.

12. System nach Anspruch 11, wobei:
die Inter-UE-Koordinationsinformationen ferner den Übertragungsbereich enthalten; und
der Übertragungsbereich basierend auf einer Layer-2-Groupcast-Ziel-ID und Dienstgüte(QoS)-Informationen identifiziert wird, die der Layer-2-Groupcast-Ziel-ID entsprechen.

13. System nach Anspruch 11, wobei:
die Inter-UE-Koordinationsinformationen als ungültig bestimmt werden, wenn die Distanz größer als der Übertragungsbereich ist; und
die Inter-UE-Koordinationsinformationen als gültig bestimmt werden, wenn die Distanz kleiner als oder gleich dem Übertragungsbereich ist.

14. System nach Anspruch 11, wobei der Transceiver ferner zu Folgendem konfiguriert ist:
Empfangen einer Inter-UE-Koordinationsinformations-Anforderung, die die Bereichs-ID enthält, von dem ersten UE; und
Übertragen der Inter-UE-Koordinationsinformationen, die der Inter-UE-Koordinationsinformations-Anforderung entsprechen, an das erste UE, und
wobei:
die Inter-UE-Koordinationsinformationen ferner einen Satz bevorzugter Ressourcen, einen Satz nicht bevorzugter Ressourcen und/oder einen Satz von Ressourcenpool-IDs enthalten, die jeweils dem Satz bevorzugter und nicht bevorzugter Ressourcen entsprechen;
die Bereichs-ID des ersten UE basierend auf einem aktuellen Standort des ersten UE und geografischen Koordinaten berechnet wird; und
die Distanz basierend auf der Bereichs-ID und einer von dem zweiten UE empfangenen Bereichs-ID berechnet wird.

15. System nach Anspruch 11, wobei:
der Transceiver ferner zu Folgendem konfiguriert ist:
Empfangen der Inter-UE-Koordinationsinformations-Anforderung, die ferner den Übertragungsbereich enthält, von dem ersten UE, und
Übertragen der Inter-UE-Koordinationsinformationen, die der Inter-UE-Koordinationsinformations-Anforderung entsprechen, an das erste UE; und
wobei die Inter-UE-Koordinationsinformations-Anforderung ferner einen Satz bevorzugter Ressourcen, einen Satz nicht bevorzugter Ressourcen oder einen Satz von Ressourcenpool-IDs enthält, die dem Satz bevorzugter Ressourcen entsprechen.

## Revendications

1. Premier équipement utilisateur (UE) dans un système de communication sans fil, le premier UE comprenant :
un émetteur-récepteur configuré pour recevoir, d'un deuxième UE, des informations de coordination inter-UE incluant des ressources de liaison latérale (SL) et une identification de zone (ID) pour l'allocation de ressources pour une transmission de donnée SL ; et
un processeur couplé de manière opérationnelle à l'émetteur-récepteur, le processeur étant configuré pour :
identifier une portée de transmission pour la transmission des données SL,
calculer, sur la base de l'ID de zone, une distance entre le deuxième UE et le premier UE,
déterminer si les informations de coordination inter-UE sont valides sur la base de la portée de transmission et de la distance, et
identifier les ressources SL sur la base d'une détermination selon laquelle les informations de coordination inter-UE sont valides,
où l'émetteur-récepteur est en outre configuré pour transmettre les données SL.

2. Premier UE selon la revendication 1, où :
les informations de coordination inter-UE incluent en outre la portée de transmission ; et
le processeur est en outre configuré pour identifier la portée de transmission sur la base d'un ID de destination de diffusion groupée de couche 2 et d'informations de qualité de service (QoS) correspondant à l'ID de destination de diffusion groupée de couche 2.

3. Premier UE selon la revendication 1, où le processeur est en outre configuré pour :
déterminer que les informations de coordination inter-UE ne sont pas valides lorsque la distance est supérieure à la portée de transmission ; et
déterminer que les informations de coordination inter-UE sont valides lorsque la distance est inférieure ou égale à la portée de transmission.

4. Premier UE selon la revendication 1, où le processeur est en outre configuré pour :
calculer l'ID de zone du premier UE sur la base d'un emplacement actuel du premier UE et de coordonnées géographiques ; et
calculer la distance sur la base de l'ID de zone et d'un ID de zone reçu du deuxième UE, et
où les informations de coordination inter-UE incluent en outre au moins un parmi un ensemble de ressources préférées, un ensemble de ressources non préférées ou un ensemble d'ID de groupe de ressources correspondant à l'ensemble de ressources préférées et non préférées, respectivement.

5. Premier UE selon la revendication 1, où l'émetteur-récepteur est en outre configuré pour :
transmettre, au deuxième UE, une demande d'informations de coordination inter-UE incluant l'ID de zone ; et
recevoir, du deuxième UE, les informations de coordination inter-UE correspondant à la demande d'informations de coordination inter-UE, et
où :
l'émetteur-récepteur est en outre configuré pour :
transmettre, au deuxième UE, la demande d'informations de coordination inter-UE incluant en outre une portée de transmission, et
recevoir, du deuxième UE, les informations de coordination inter-UE correspondant à la demande d'informations de coordination inter-UE ; et la demande d'informations de coordination inter-UE inclut en outre un ensemble de ressources préférées, un ensemble de ressources non préférées ou un ensemble d'ID de groupe de ressources correspondant à l'ensemble de ressources préférées.

6. Procédé d'un premier équipement utilisateur (UE) dans un système de communication sans fil, le procédé comprenant :
recevoir, d'un deuxième UE, des informations de coordination inter-UE incluant des ressources de liaison latérale (SL) et une identification de zone (ID) pour l'allocation de ressources pour une transmission de données SL ;
identifier une portée de transmission pour la transmission des données SL ;
calculer, sur la base de l'ID de zone, une distance entre le deuxième UE et le premier UE ;
déterminer si les informations de coordination inter-UE sont valides sur la base de la portée de transmission et de la distance ;
identifier les ressources SL sur la base d'une détermination selon laquelle les informations de coordination inter-UE sont valides ; et
transmettre les données SL.

7. Procédé selon la revendication 6, comprenant en outre l'identification de la portée de transmission sur la base d'un ID de destination de diffusion groupée de couche 2 et d'informations de qualité de service (QoS) correspondant à l'ID de destination de diffusion groupée de couche 2, où les informations de coordination inter-UE incluent en outre la portée de transmission.

8. Procédé selon la revendication 6, comprenant en outre :
déterminer que les informations de coordination inter-UE ne sont pas valides lorsque la distance est supérieure à la portée de transmission ; et
déterminer que les informations de coordination inter-UE sont valides lorsque la distance est inférieure ou égale à la portée de transmission.

9. Procédé selon la revendication 6, comprenant en outre :
calculer l'ID de zone du premier UE sur la base d'un emplacement actuel du premier UE et de coordonnées géographiques ; et
calculer la distance sur la base de l'ID de zone et d'un ID de zone reçu du deuxième UE, et
où les informations de coordination inter-UE incluent en outre au moins un parmi un ensemble de ressources préférées, un ensemble de ressources non préférées ou un ensemble d'ID de groupe de ressources correspondant à l'ensemble de ressources préférées et non préférées, respectivement.

10. Procédé selon la revendication 6, comprenant en outre :
transmettre, au deuxième UE, une demande d'informations de coordination inter-UE incluant l'ID de zone ; et
recevoir, du deuxième UE, des informations de coordination inter-UE correspondant à la demande d'informations de coordination inter-UE, ou
transmettre, au deuxième UE, la demande d'informations de coordination inter-UE incluant en outre une portée de transmission ; et
recevoir, du deuxième UE, les informations de coordination inter-UE correspondant à la demande d'informations de coordination inter-UE,
où la demande d'informations de coordination inter-UE inclut en outre un ensemble de ressources préférées, un ensemble de ressources non préférées ou un ensemble d'ID de groupe de ressources correspondant à l'ensemble de ressources préférées.

11. Système de communication sans fil comprenant :
un premier équipement utilisateur, UE, comprenant :
un émetteur-récepteur et un processeur connecté de manière opérationnelle à l'émetteur-récepteur,
un deuxième équipement utilisateur, UE, comprenant :
un processeur configuré pour générer des informations de coordination inter-UE incluant des ressources de liaison latérale, SL, et une identification de zone, ID, et
un émetteur-récepteur connecté de manière opérationnelle au processeur, l'émetteur-récepteur étant configuré pour :
transmettre, à un premier UE, les informations de coordination inter-UE pour l'allocation de ressources pour une transmission de données SL, et
recevoir, du premier UE, les données SL, où :
le processeur du premier UE est configuré pour :
identifier une portée de transmission pour la transmission des données SL,
calculer, sur la base de l'ID de zone dans les informations de coordination inter-UE reçues, une distance entre le deuxième UE et le premier UE,
déterminer si les informations de coordination inter-UE sont valides sur la base de la portée de transmission et de la distance, et
identifier les ressources SL sur la base d'une détermination selon laquelle les informations de coordination inter-UE sont valides.

12. Système selon la revendication 11, où :
les informations de coordination inter-UE incluent en outre la portée de transmission ; et
la portée de transmission est identifiée sur la base d'un ID de destination de diffusion groupée de couche 2 et d'informations de qualité de service (QoS) correspondant à l'ID de destination de diffusion groupée de couche 2.

13. Système selon la revendication 11, où :
les informations de coordination inter-UE sont déterminées comme non valides lorsque la distance est supérieure à la portée de transmission ; et
les informations de coordination inter-UE sont déterminées comme valides lorsque la distance est inférieure ou égale à la portée de transmission.

14. Système selon la revendication 11, où l'émetteur-récepteur est en outre configuré pour :
recevoir, du premier UE, une demande d'informations de coordination inter-UE incluant l'ID de zone ; et
transmettre, au premier UE, les informations de coordination inter-UE correspondant à la demande d'informations de coordination inter-UE, et
où :
les informations de coordination inter-UE incluent en outre au moins un parmi un ensemble de ressources préférées, un ensemble de ressources non préférées ou un ensemble d'ID de groupe de ressources correspondant à l'ensemble de ressources préférées et non préférées, respectivement ;
l'ID de zone du premier UE est calculé sur la base d'un emplacement actuel du premier UE et de coordonnées géographiques ; et
la distance est calculée sur la base de l'ID de zone et d'un ID de zone reçu du deuxième UE.

15. Système selon la revendication 11, où :
l'émetteur-récepteur est en outre configuré pour :
recevoir, du premier UE, la demande d'informations de coordination inter-UE incluant en outre une portée de transmission, et
transmettre, au premier UE, les informations de coordination inter-UE correspondant à la demande d'informations de coordination inter-UE ; et
la demande d'informations de coordination inter-UE inclut en outre un ensemble de ressources préférées, un ensemble de ressources non préférées ou un ensemble d'ID de groupe de ressources correspondant à l'ensemble de ressources préférées.
